# EUROPEAN PATENT APPLICATION

(11) **EP 2 096 156 A1**
(43) Date of publication of application: **02.09.2009**
(21) Application number: 08101685.9
(22) Date of filing: 15.02.2008
(51) Int. Cl.: C09K 8/584, C09K 8/60

(54) **Method of transporting a chemical agent through a porous underground formation**

(71) Applicant: SHELL INTERNATIONALE RESEARCH MAATSCHAPPIJ B.V., 2596 HR Den Haag (NL)
(72) Inventor: Berg, Steffen, 6868GS Rijswijk (NL)
(74) Representative: Zeestraten, Albertus W. J.

(57) **Abstract**

A method of transporting a chemical agent through a porous underground formation(1) in which a fluid interface, such as an oil/water, oil/gas and or water/gas interface, is present, which method comprises mixing the agent with a surfactant and injecting the mixture(2) into the formation(1) in the vicinity of the fluid interface(3), thereby inducing the mixture to spread along the fluid interface(3).

## Description

### BACKGROUND OF THE INVENTION

The invention relates to a method of transporting a chemical agent through a porous underground formation.

It is known to inject chemical agents into a porous underground formation, which may comprise pore spaces that may contain water, crude oil, natural gas and/or other fluids. The chemical agents may serve to stabilize the formation, to enhance crude oil recovery and/or to inhibit water influx into crude oil production wells.

Chemical agents are often dissolved in an aqueous phase when injected.

A problem with injecting chemical agents into underground formations is that the chemical agents may have a different density and viscosity than the fluids within the pore spaces, which may lead to an uneven distribution of the chemical agent through the formation. Another problem that often arises is that due to unfavorable wettability, chemicals that are dissolved in an aqueous phase or are hydrophilic cannot be injected into oil-wet parts of the reservoir. Injecting them by pressure would also not be successful because the fluid flow would bypass the target volume of the reservoir for instance through fractures. It is an object of the present invention to solve this problem and to provide a method of transporting a chemical agent in an accurate and predictable manner through an underground formation.

### SUMMARY OF THE INVENTION

In accordance with the invention there is provided a method of transporting a chemical agent through a porous underground formation in which a fluid interface, such as an oil/water, oil/gas and or water/gas interface, is present, the method comprising mixing the agent with a surfactant and injecting the mixture into the formation in the vicinity of the fluid interface, thereby inducing the mixture to spread along the fluid interface.

The surfactant may be selected from the group of anionic, cationic and nonionic surfactants and alcohols, such as a low molecular weight alcohol, for example 2-butoxy ethanol.

The fluid interface may be a crude oil-water, a crude oil- natural gas or a water- natural gas interface and the chemical agent may be an enhanced oil recovery agent and be injected at a crude oil-water or crude oil-natural gas interface, and wherein subsequently crude oil and or natural gas is produced from the underground formation.

These and other features, advantages and embodiments of the method according to the invention are described in more detail in the accompanying claims, abstract and the following detailed description of a preferred embodiment in which reference is made to the accompanying drawing.

### BRIEF DESCRIPTION OF THE DRAWING

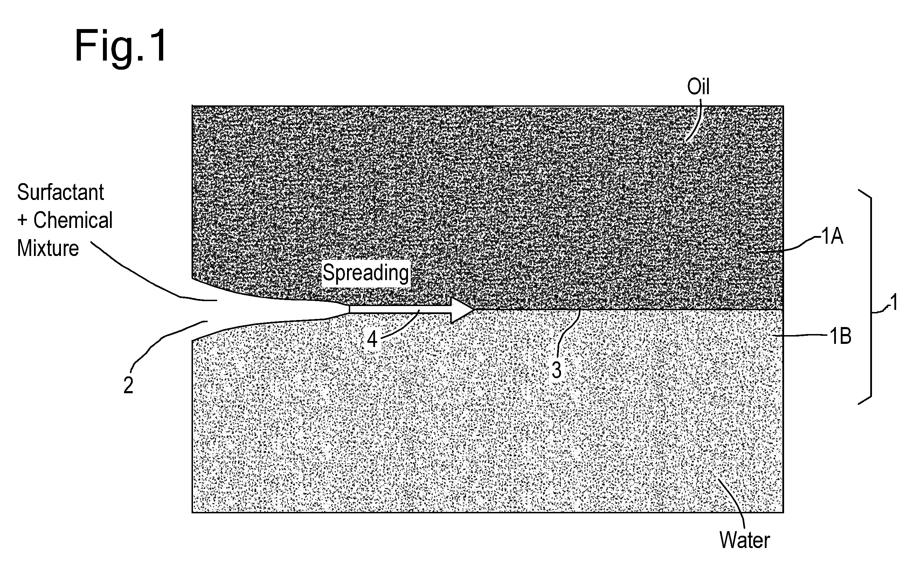

FIG.1 shows the interface between oil and water along which a chemical agent and surfactant containing mixture is transported using the method according to the invention.

### DETAILED DESCRIPTION OF THE DEPICTED EMBODIMENT

FIG.1 shows a microscopic picture of the water-oil interface in a pore of an underground underground formation 1, which comprises an upper section 1A of which the pore space is filled with crude oil and a lower section 1B of which the pore space is filled with water.

A mixture 2 of a chemical agent and a surfactant is injected into the pores of the formation in the vicinity of the oil-water interface 3 between the upper and lower sections 1A and 1B in the pores of the formation 1.

The mixture is then induced to migrate and distribute itself along the oil-water interface 3 as illustrated by arrow 4.

It is believed that the driving force behind this surprisingly effective transportation mechanism is the interfacial energy of the oil-water interface 3, which is often in the range of 20-40 mN/m and that a surfactant reduces the interfacial energy locally thereby producing gradients in interfacial tension which drive fluid flow. A somewhat similar effect is known at air-liquid interfaces, which is known as the Marangoni effect. It is surprising that a similar effect occurs in narrow pore spaces in an underground formation and that this effect can be used to transport and a mixture 2 of a chemical agent and a surfactant in a surprisingly effective and accurate manner over significant distances into an underground formation, whereby the mixture 2 is distributed evenly along the oil water interface 3.

In model systems where the clean interface between water and decane has been considered, aqueous solutions of sodium dodecyl sulfate (SDS) and dodecyl trimethyl ammonium bromide (DTAB) above the critical micelles concentration (CMC) have been found to spread in a radial geometry over distances of 20 cm in less than 1 second.

Detailed studies on the spreading kinetics support the view that this mechanism is indeed driven by the interfacial energy between water and decane and that this phenomenon is indeed correctly attributed to the Marangoni effect. While in the literature this phenomenon has been shown several times for the interface between a liquid and air, we have demonstrated for the first time that this mechanism is also effective along the interface between two immiscible liquids. As a result of the experiments with model system, quantitative mathematical description of the effect was obtained.

## Claims

1. A method of transporting a chemical agent through a porous underground formation, which comprises a fluid interface, the method comprising mixing the agent with a surfactant and injecting the mixture into the formation in the vicinity of the fluid interface, thereby inducing the mixture to spread along the fluid interface.

2. The method of claim 1, wherein the surfactant is selected from the group of anionic, cationic and nonionic surfactants.

3. The method of claim 1, wherein the surfactant is an alcohol.

4. The method of claim 3, wherein the alcohol is a low molecular weight alcohol.

5. The method of claim 4, wherein the low molecular weight alcohol is 2-butoxy ethanol.

6. The method of claim 1, wherein the fluid interface is a crude oil/water, a crude oil/ natural gas or a water/ natural gas interface.

7. The method of claim 6, wherein the chemical agent is an enhanced oil recovery agent and is injected at a crude oil/water or crude oil/natural gas interface, and wherein subsequently crude oil and/or natural gas is produced from the underground formation.
